# EUROPEAN PATENT SPECIFICATION

(11) **EP 1 353 092 B1**
(45) Date of publication and mention of the grant of the patent: **17.06.2009**
(21) Application number: 03008015.4
(22) Date of filing: 10.04.2003
(51) Int. Cl.: F16H 25/22, F16C 33/30, F16C 33/37, F16C 29/06

(54) **Linear motion device**
Linearführungsvorrichtung
Système à guide linéaire

(30) Priority: 11.04.2002 JP 2002109409; 19.04.2002 JP 2002117853; 14.05.2002 JP 2002138957; 29.05.2002 JP 2002155977; 17.06.2002 JP 2002175835
(43) Date of publication of application: 15.10.2003
(73) Proprietor: NSK LTD., Shinagawa-ku, Tokyo (JP)
(72) Inventor: Okita, Shigeru c/o NSK Ltd.,, Fujisawa-shi, Kanagawa (JP); Uyama, Hideyuki c/o NSK Ltd.,, Fujisawa-shi, Kanagawa (JP); Tanaka, Susumu c/o NSK Ltd.,, Fujisawa-shi, Kanagawa (JP); Iso, Kenichi c/o NSK Ltd.,, Fujisawa-shi, Kanagawa (JP)
(74) Representative: Grünecker, Kinkeldey, Stockmair & Schwanhäusser Anwaltssozietät

(56) References cited:
- EP-A- 1 167 791
- US-A- 6 071 358
- US-A1- 2001 039 234

## Description

### BACKGROUND OF THE INVENTION

### 1. Field of the Invention

The present invention relates to a linear motion device, specifically a ball screw, and particularly relates to elongation of the life of a linear motion device for use in a swinging portion in an electrically-operated injection molding machine, an electrically-operated pressing machine, or the like, to which a high load is applied intermittently and which is used very often for reciprocating motion in a short stroke.

### 2. Description of the Related Art

A ball screw has been recently popularly used as a substitute for a hydraulic cylinder so that rotational motion can be converted into linear motion in an electrically-operated injection molding machine, an electrically-operated pressing machine or the like, and that linear motion can be performed smoothly without frictional loss.

For example, the ball screw of full-ball type being one example of the linear motion device includes a screw shaft having a helical male thread groove formed in its outer circumferential surface, a nut having a helical female thread groove formed in its inner circumferential surface so that the pitch of the female thread groove is the same as that of the male thread groove, and balls interposed between the male thread groove and the female thread groove so as to roll freely. A circulation path for making one end side of the female thread groove communicate with the other end side of the female thread groove is formed in the nut.

When the screw shaft and the nut are rotated relative to each other, the balls move forward in the female thread groove while rolling in a rolling path formed between the male thread groove and the female thread groove. Each ball reaching one end side of the female thread groove circulates from one end side of the female thread groove to the other end side of the female thread groove through the circulation path, so that the ball is supplied into the rolling path between the male thread groove and the female thread groove and rolls in the rolling path again.

The balls rolling in between the male thread groove and the female thread groove rotate in one direction. When adj acent ones of the balls come into direct contact with each other, relative slip having a speed twice as high as the rolling speed is generated because the balls move in directions reserve to each other in ball surfaces which are contact portions. There is a possibility of generating a phenomenon called "competition between balls". As a result, there is a disadvantage in that the ball surfaces may be abraded early or in that burning of the balls and the thread grooves may be caused by frictional heat.

Each of contact points between each ball and the screw shaft or between each ball and the nut is shaped like a very small ellipse called "contact ellipse" through grease or a lubricant, so that surface pressure at the contact point becomes extremely high.

The related-art ball screw is produced from special materials so that the ball screw can bear the high surface pressure. That is, carburized bearing steel such as SCM420 or induction hardened steel such as SAE4150, which is heated so that the surface hardness of the material is adjusted to about HRC 56-63, is used as the material of each of the screw shaft and the nut.

High-carbon chromium bearing steel such SUJ2, which is quench-hardened to have a surface hardness of not lower than HRC 60, is used as the material of each of the balls.

The ball screw used in an electrically-operated injection molding machine, an electrically-operated pressing machine or the like is used in a short stroke in which a high load is applied instantaneously. The ball screw is used under a severe condition of reciprocating motion in which backward rotation is made after once interruption is performed in a state in which the maximum load acts on the ball screw.

For this reason, an oil film on the ball-rolling surface is scraped off, so that a lubricant may hardly enter the contact surface between the thread grooves and each ball. There is a tendency for the oil film to be formed insufficiently. There is a problem that abrasion and peeling due to surface damage occurs easily in the rolling surfaces of the screw shaft, the nut and the balls.

The damage due to the competition between balls is remarkable particularly in the contact surface between adjacent ones of the balls in which relative slip having a speed twice as high as the rolling speed of each ball is generated.

Furthermore, deformation of a machine table due to the action of a high load or misalignment at the time of mounting makes the competition between balls more remarkable to thereby shorten the life of the ball screw more greatly.

In order to prevent balls from wearing and improve the durability, a ball screw in which carbonitriding treatment is applied to the surfaces of balls so as to improve the lives of the balls has been proposed, for example, in JP-A-10-103945 and JP-A-11-300803. According to the ball screw, carbonitriding treatment is applied to the surfaces of balls so as to deposit plenty of martensitic structure on the surfaces. Thus, the surface hardness of the balls is enhanced so that the sensibility to cracks is reduced.

However, when there occurs competition between the balls, damage to the ball surf aces cannot be avoided even if the hardness of the ball surfaces is enhanced by the carbonitriding treatment applied to the ball surfaces. The damage causes breakage of a screw shaft or a nut in an early stage due to failure in lubrication.

As means for eliminating the competition between balls, a ball screw of the type in which spacer balls each having a diameter smaller by approximately a value of from the order of microns to the order of tens of microns than that of each load ball are interposed between the load balls bearing a load has been proposed in JP-A-2000-291770.

Although the competition between balls can be eliminated by the interposition of the spacer balls, the spacer balls cannot receive the load so that the number of balls receiving the load is substantially reduced. There is a problem that the load allowed to be imposed on the ball screw is reduced.

As a ball screw in which the competition between balls is prevented as well as great reduction in allowable load is avoided, a ball screw having retaining pieces each interposed between adjacent ones of balls and having a pair of concave surfaces facing the adjacent ones of the balls respectively has been disclosed, for example, in JP-A-11-315835, JP-A-2000-199556, JP-A-2001-21018, JP-A-2001-124172 and JP-A-13-124172, or US 2001/0039234 A1, which constitutes the closest prior art.

Because the balls are disposed so as to be in contact with the concave surfaces of the retaining pieces respectively, a considerably large number of load balls can be disposed compared with the ball screw using the spacer balls. Reduction in allowable load can be suppressed.

Furthermore, because the competition between balls is eliminated, a lubricant can be held in each of the concave surfaces of the retaining pieces. There is an advantage in that lubricating failure is reduced remarkably.

A ball screw formed so that the curvature radius of each thread groove shaped like a so-called Gothic arch is reduced in order to reduce surface pressure at a contact ellipse which is one of contact points between each ball and the screw shaft or between each ball and the nut has been also proposed.

For example, JP-A-2000-39052 has disclosed a ball screw in which the curvature radius of the male thread groove of the screw shaft is selected to be smaller than the curvature radius of the female thread groove of the nut to thereby reduce the contact surface pressure between the male thread groove and each ball to relax the condition of the screw shaft being damaged more easily than the nut to attain elongation of the life of the ball screw.

When the ball screw is used under a high-load condition, large shearing force, however, acts on the inside of the material just under the contact ellipse. There is a problem that the screw shaft or the nut results in being peeled although the retaining pieces are used for eliminating the competition between balls while the curvature radius of the male thread groove of the screw shaft is reduced to reduce the contact surface pressure between the male thread groove and each ball.

Accordingly, the ball screw can hardly bear the severe use condition of reciprocating motion at a high speed, under a high load and in a short stroke even in the case where the retaining pieces are interposed between the balls to prevent the competition between the balls while the curvature radius of the male thread groove is reduced to reduce the contact surface pressure. There is still room for improvement in order to achieve the long life of the ball screw.

Further, the present inventors have examined a damage mode of the ball screw having retaining pieces interposed between balls. As a result, it has been found that peeling changes from surface start type peeling caused by lubricating failure with a surface as the starting point to combined peeling in which the surface start type peeling is combined with inside start type peeling with an inside as the starting point. The inside start type peeling cannot be avoided perfectly even if the lubricating performance of a lubricant is improved. The life of the ball screw-having retaining pieces cannot be elongated to its maximum unless the inside start type peeling is prevented.

On the other hand, lithium soap-mineral oil-based grease or lithium composite soap-mineral oil grease-based is generally enclosed in the ball screw. The strength of a thickener is however so insufficient that both heat resistance and oil film retention property are low. Particularly for the purpose of use in a high load-applied apparatus such as an electrically-operated injection molding machine or a pressing machine, a satisfied result has been never obtained in terms of the life of the ball screw.

### SUMMARY OF THE INVENTION

The object of the invention is to provide a long-lived linear motion device (ball screw) in consideration of such circumstances and particularly provide a linear motion device (ball screw) which can be kept long-lived even in the case where a high load is imposed on the ball screw. This object is solved by a linear motion device according to claim 1. An advantageous embodiment of the invention is referred to in claim 2.

According to the linear motion device configured thus, each of the retaining pieces having two concave surfaces facing adjacent ones of the rolling elements respectively is disposed between the adjacent ones of the rolling elements. As a result, the rolling elements roll and circulate together with the retaining pieces in the rolling element groove while being in contact with, for example, the Gothic-arch-like concave surfaces of the retaining pieces with extremely low friction. Thus, the competition between the rolling elements is prevented so that operation failure and production of noise and abnormal sound, and frictional damage of the rolling elements can be prevented from being caused by competition between the rolling elements.

In addition, a considerably large number of load rolling elements than in a linear motion device using spacer-balls can be disposed so that the lives of the rolling elements can be elongated without reducing the allowable load capacity.

Further, a carbonitrided layer containing residual austenite of 15-40% by volume is provided in the surface layer of each of the rolling elements. Accordingly, high surface hardness and moderate softness can be provided to the rolling elements. Thus, when the rolling elements roll in the rolling element groove and the circulation path, the shock when the rolling elements abut against the rolling element groove and the circulation path is relieved so that the rolling element groove and the circulation path, particularly the connection portion from the rolling element groove to the circulation path suffering a large shock load, or the corner portion formed in the connection portion from the circulation path to the rolling element groove can be prevented from falling away as a large peeling piece. Thus, good lubricating conditions can be kept for a long time.

In addition, a shock load occurring when the linear motion device is stopped and reversed after the linear motion device suffers a maximum load can be relieved. As a result, the internal fatigue of the shaft and the linear motion body is relieved so that occurrence of inside start type peeling as will be described later can be prevented. Thus, the life of the linear motion device can be made long.

If the linear notion device is a ball screw, the behavior of each ball becomes complex because the state of the ball is changed from a loaded state to an unloaded state by a returning mechanism. On the other hand, the ball-rolling surface of each of the nut and the screw shaft is shaped like a Gothic arch. Accordingly, contact points between each ball and the screw shaft/nut change according to the loaded state so that the ball comes into contact with the screw shaft/nut at two, three or four points. Furthermore, because this fact is combined with the fact that the ball-rolling surface is helically continuous, an ideal rolling state cannot be obtained so that spin-slip occurs in the ball. Furthermore, each of the contact points between the ball and the screw shaft or between the ball and the nut is shaped like a narrow ellipse called "contact ellipse" through an oil film constituted by grease or lubricating oil, so that a very high surface pressure is generated even ordinarily. For this reason, in the ball screw incorporated in an electrically-operated injection molding machine, a pressing machine or the like and burdened with a high load, differential slip in the contact ellipse becomes very large.

Increase in such spin-slip and differential slip causes a tendency for a mechanochemical reaction to be produced between the ball and the screw shaft or between the ball and the nut because both the ball and the screw shaft/nut are made of metal. As a result, there comes the situation that white structure (abnormal structure) is generated easily.

On the other hand, a grease composition containing antirust additives is often enclosed in the ball screw used in an electrically-operated injection molding machine, a pressing machine or the like. The inventors have examined the correlation between the kind of the antirust additives and the generation of the white structure. As a result, it has been found that metal sulfonate used popularly because of its excellent antirust characteristic has a tendency toward the promotion of the mechanochemical reaction compared with other antirust additives. It is conceivable that this is caused by the sulfonate's property of being easily deposited on metal surfaces. On the other hand, when a urea compound is used as a thickener, a firmer oil film can be formed to suppress occurrence of metallic contact. The invention is based on the aforementioned knowledge.

### BRIEF DESCRIPTION OF THE DRAWINGS

Fig. 1 is a plan view of a ball screw showing a linear motion device according to the invention;
Fig. 2 is a longitudinal sectional view taken along line A-A in Fig. 1;
Fig. 3 is longitudinal sectional view along a thread groove in Fig. 2;
Fig. 4 is an enlarged sectional view of a retaining piece in Fig. 3;
Fig. 5 is a graph of test results, showing the relationship among the presence/absence of retaining pieces, the residual austenite amount and the ball screw life according to a first embodiment of the invention;
Fig. 6 is a perspective view of a linear guide to which the invention has been applied;
Fig. 7 is a perspective view of a linear ball bearing to which the invention has been applied;
Fig. 8 is a graph of test results showing the relation between the amount of Cr contained in the steel material of the ball screw and the life of the ball screw according to a second embodiment;
Fig. 9 is an enlarged sectional view taken along the axial direction of the ball screw according to a third embodiment;
Fig. 10 is a graph showing the correlation between the ratio of the curvature radius of the male thread groove of the screw shaft to the diameter of each ball and the life ratio according to the third embodiment;
Fig. 11 is a graph showing results of a durability life test in Example 25 according to a fourth embodiment;
Fig. 12 is a graph showing the relation between the amount of added naphthenate or succinic derivative and the peeling life obtained in Examples 26 and 27 according to a fifth embodiment; and
Fig. 13 is a graph showing the relation between the amount of added organometallic salt and the peeling life obtained in Example 28 according to the fifth embodiment.

### DETAILED DESCRIPTION OF THE PREFERRED EMBODIMENTS

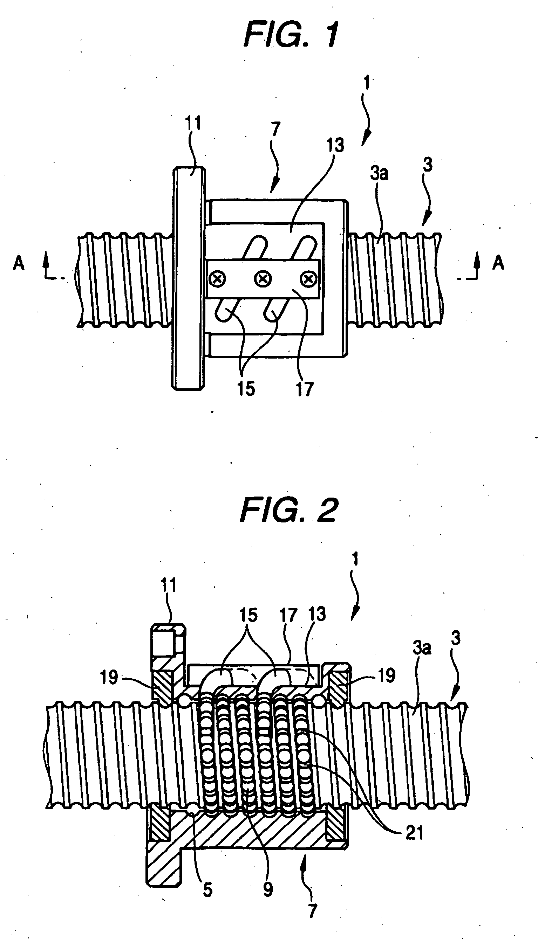

An embodiment of a linear motion device according to the invention will be described below with reference to Figs. 1

As shown in Figs. 1 to 4, a ball screw 1 which is an example of a linear motion device according to this embodiment includes a screw shaft 3 having a male thread groove 3a formed in its outer circumferential portion, a cylindrical nut 7 which is a linear motion body having a female thread groove 5 formed in its inner circumferential surface, and a plurality of balls 9 interposed between the male thread groove 3a and the female thread groove 5.

The screw shaft 3 is provided for guiding the nut 7 in the axial direction of the screw shaft 3. For example, the screw shaft 3 is produced by induction-hardening AISI5140 or the like, or carburizing or carbonitriding case-hardened steel of SCM420 or the like so as to adjust the surface hardness to about HRC 56-63.

In addition, the male thread groove 3a is formed to have a sectionally semicircular shape having a curvature radius substantially equal to a radius r of each ball 9 all over the outer circumferential surface, or a so-called Gothic arch shape in which circular arcs having a curvature radius slightly larger than the radius r of each ball 9 are crossed with each other in the intermediate portion.

The pitch of the male thread groove 3a can be arbitrarily selected in accordance with the specifications of an apparatus (not shown) in which the ball screw 1 will be incorporated.

The nut 7 is provided to move linearly in the axial direction of the screw shaft 3 and is cylindrically shaped. A flangs 11 for fixing the nut 7 to a table (not shown) of the apparatus is formed at one end of the nut 7. A part of the outer circumferential surface of the nut 7 is cut away so that a flat portion 13 is formed in the cut portion.

For example, the nut 7 is produced by carburizing and quench-hardening case-hardened steel of SCM420 or the like, or quench-hardening/tempering high-carbon chromium bearing steel such as SUJ2 or SUJ3 so as to adjust the surface hardness to about HRC S6-63.

In addition, when corrosion resistance is required, martensitic stainless steel can be also used.

The female thread groove 5 having the same shape and the same pitch as the male thread groove 3a is formed in the inner circumferential surface of the nut 7. A steel tube 15 is fixed to the flat portion 13 by a tube pressing member 17 so as to form a circulation path making one end side of the female thread groove 5 communicate with the other end side of the female thread groove 5.

Then, the balls 9 are transported into the tube 15 so as to circulate from the one end side of the female thread groove 5 to the other end side of the female thread groove 5.

In addition, a plastic dust seal 19 is disposed at each of opposite ends of the nut 7 so as to prevent an alien substance from entering the nut 7 from the outside.

Theballs 9 roll to allow the nut 7 to move linearly smoothly without friction loss. The balls 9 are disposed to roll freely in a rolling path formed between the male thread groove 3a and the female thread groove 5.

As the material of the balls 9 for use in the ball screw 1 according to this embodiment, high-carbon chromium bearing steel such as SUJ2 having the Si content of 0.35% or lower and the total Cr+2.5Mo content of 2.0% or lower, preferably 1.8% or lower, is used. The balls 9 are produced by applying carbonitriding treatment to the surface of the high-carbon chromium bearing steel, and then performing tumbling or ball-peening thereon, so as to adjust the residual austenite amount to 15-40% by volume in the surface layer and the surface hardness to HRC 62-67 (Hv 746-900).

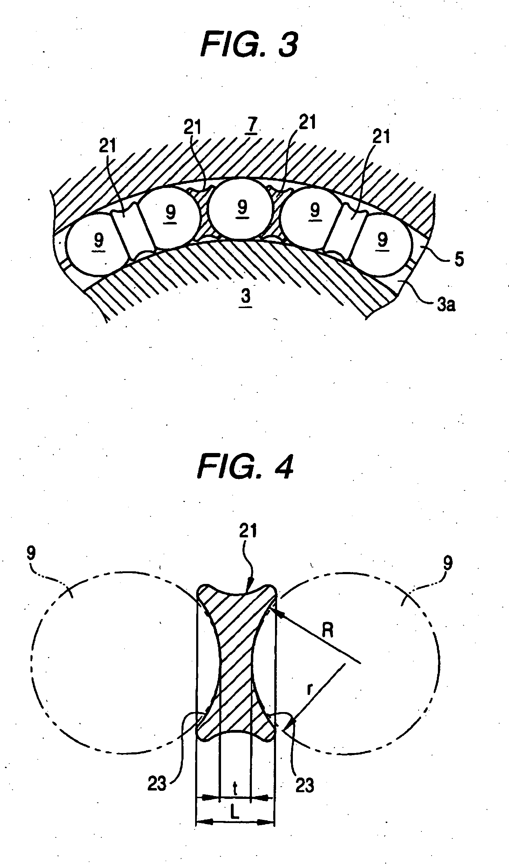

As shown in Figs. 3 and 4, each of retaining pieces 21 is interposed between adjacent ones of the balls 9 so that the balls 9 can be prevented from coming into direct contact with each other. For example, each of the retaining pieces 21 is made of polyamide, fluororesin, or nylon resin having a lubricating function in itself, or made of polyethylene impregnated with lubricating oil. Each of the retaining pieces 21 is shaped like a disk which is formed so that a pair of concave spherical surfaces 23 each having a curvature radius R larger than the radius r of each ball 9 are formed at opposite ends of the disk.

Accordingly, the thickness t of a central portion of each retaining piece 21 can be made small compared with the total length L so that the contact area between the ball 9 and the retaining piece 21 can be reduced to minimize frictional resistance as well as a large number of balls 9 can be disposed.

The shape of each of the concave spherical surfaces 23 is not limited to the spherical shape. Each of the surfaces 23 may be a concave surface shaped like a so-called Gothic arch which is formed so that two circular arcs cross-each other at an intermediate portion. Or, each of the surfaces 23 may be a concave surface shaped like a cone. A through-hole may be provided between the two concave surfaces 23 of each retaining piece 21. A lubricant may be held in the through-hole so that the contact resistance between the ball 9 and the retaining piece 21 can be reduced.

The diameter (ds) of the retaining piece 21 is selected to be smaller than the diameter D of the ball 9 inclusive of the diameter of the ball 9 which is elastically deformed when the maximum load acts on the ball 9. When the retaining pieces 21 pass through the rolling path formed between the male thread groove 3a and the female thread groove 5 and pass through the tube 15 forming the circulation path, the retaining pieces 21 can circulate smoothly without interference with the rolling path, the tube 15 and a connection portion therebetween.

Specifically, the diameter (ds) of the retaining piece 21 is preferably selected to be 0.5 times to 0.9 times as large as the diameter D of the ball 9 (i.e., ds = 0.5D to 0.9D).

If the gap between the ball 9 and the retaining piece 21 disposed in the rolling path is too large, the retaining piece 21 lies down so that it cannot fulfill its function. If the gap is too small, frictional force between the retaining piece 21 and the ball 9 increases to cause a factor of operation failure. Accordingly, the gap is selected to be optimized.

Specifically, the number of the balls 9/retaining pieces 21 is selected so that total gap S1, which is the gap formed between a ball 9 at the head and a retaining piece 21 at the tail on the assumption that all the balls 9 and retaining pieces 21 disposed in the rolling path are collected to one side, is larger than zero (S1 > 0) whereas gap S2, which is the gap formed between a ball 9 at the head and a ball 9 at the tail on the assumption that one retraining piece 21 at the tail is removed, is smaller than 0.8 times as large as the diameter (ds) of each retaining piece 21 (S2 < 0.8. X ds). As a result, each retaining piece 21 is prevented from being inclined at an angle of about 60° or higher in the rolling path, so that it can fulfill its function well.

The operation of the ball screw according to this embodiment will be described.

As shown in Figs. 1 to 3, in the ball screw 1 according to this embodiment, when the screw shaft 3 is rotated by a motor (not shown), the nut 7 moves in the axial direction of the screw shaft 3 while thread-engaged with the screw shaft 3 through the balls 9.

On this occasion, because the male thread groove 3a and the female thread groove 5 rotate in directions reverse to each other, the balls 9 roll with respect to the male thread groove 3a and the female thread groove 5 and move forward in the female thread groove 5. Each ball 9 reaching one end side of the female thread groove 5 is supplied to the other end side of the female thread groove 5 again while rolling in the tube 15, whereby the balls 9 are circulated.

In the ball screw 1, the direction of motion changes at the connection portion between the rolling path formed between the male thread groove 3a and the female thread groove 5 and the tube 15 which is the circulation path as well as the rolling path is helically continuous. Therefore, the load acting on the balls 9 at the connection portion changes rapidly from a loaded state to an unloaded state or inversely from an unloaded state to a loaded state, so that the behavior of each ball 9 becomes complex.

In case that each of the male thread groove 3a and the female thread groove 5 is shaped like a Gothic arch (see Fig. 9 described later), the contact state between each ball 9 and the male thread groove 3a and between each ball 9 and the female thread groove 5 varies according to the load. Each ball 9 rolls while the contact state varies to a two-point contact state, a three-point contact state or a four-point contact state.

Because the rolling path is helically continuous, each ball 9 does not roll in an ideal rolling state so that slip due to spinning motion occurs in between each ball 9 and the male thread groove 3a and between each ball 9 and the female thread groove 5.

Each of the contact points between each ball 9 and the male thread groove 3a and between each ball 9 and the female thread groove 5 is shaped like a small-area ellipse called "contact ellipse" through grease or lubricating oil, so that a very high surface pressure is generated in the contact ellipse portion. In the ball screw 1 on which a high load acts, differential slip at the contact ellipse is large because the contact ellipse is enlarged.

In the ball screw 1 used in an injection molding machine, a pressing machine or the like in a condition that a high load acts on the ball screw 1 intermittently, there is a tendency for abrasion of the balls 9 to be accelerated by the competition between the balls 9 peculiar to the ball screw.

Adjacent ones of the balls 9 are however prevented from coming into direct contact with each other because each retaining piece 21 is interposed between the adjacent ones of the balls 9. The slip velocity of the ball 9 relative to the retaining piece 21 is 1/2 as high as the velocity in the case where the adjacent balls 9 come into direct contact with each other.

Accordingly, the friction between the retaining piece 21 and the ball 9 becomes low, so that the retaining piece 21's own lubricity and the lubricity of grease held in the gap between the retaining piece 21 and the ball 9 can prevent the retaining piece 21 and the ball 9 from being abraded. Accordingly, the balls 9 can circulate in the rolling path smoothly without operation failure, production of noise, worseningofsoundtone, etc. due to the competition between the balls 9, so that a smooth and quiet operation can be made for a long time.

As shown in Fig. 4, the thickness t between the concave spherical surfaces 23 formed in the central portion of each retaining piece 21 is so small that a large number of balls 9 can be disposed in the ball screw 1 compared with the ball screw using spacer balls. Accordingly, a ball screw 1 bearing a high load and having a larger stiffness can be produced.

The curvature radius R of each concave spherical surface 23 is selected to be larger than the radius r of each ball 9, so that drive resistance is reduced because grease can easily enter the gap between the ball 9 and the concave spherical surface 23 as well as slip resistance is reduced relatively because the contact area between the ball 9 and the retaining piece 21 can be reduced.

The outer diameter ds of each retaining piece 21 is selected to be in a range of from 0.5 times to 0.9 times as large as the diameter D of each ball 9, so that the retaining pieces 21 can circulate smoothly together with the balls 9 without interference with the rolling path, the tube 15 and the connection portion therebetween when passing through the rolling path and the tube 15. Change of torque and abrasion of the retaining pieces 21 can be also suppressed.

The gap between the balls 9 and the retaining pieces 21 in the rolling path and the tube 15 is set so that the total gap S1 satisfies the relation S1 > 0 while the gap S2 between the ball 9 at the head and the ball 9 at the tail satisfies the relation S2 < 0.8 X ds on the assumption that one retaining piece 21 at the tail is removed. Accordingly, each retaining piece 21 is prevented from being inclined in the rolling path, so that a good operation can be kept.

The inventors have confirmed that a damage in the surface of the balls 9 is remarkably reduced, the life time of the ball screw 1 is largely extended by interposition of the retaining pieces 21 between the rolling balls 9 to eliminate the competition between the balls 9. However, even with the ball screw 1 in which the retaining pieces are interposed, there could be caused a damage in the use condition of high load. The inventors have made examination for many years about damage. As a result, it has been found that inside start type peeling is a damage mode other than surface start type peeling heretofore regarded as being caused by lubricating failure.

The inside start type peeling means that great shearing force acts on the inside of the material where a high load on the ball screw 1 is applied, so that the inside of the material is fatigued and finally peeled. This suggests that interposition of the retaining pieces 21 between the balls 9 is not a perfect countermeasure against the surface start type peeling caused by competition between the balls or the like, and there is room for improvement.

In the rolling path and the circulation path 15 of the ball screw 1, a portion having a sharp change in direction is inevitably provided for circulating the balls 9. That is, in the connection portion for connecting the rolling path with the tube 15 forming the circulation path, the direction is changed suddenly for picking up the balls 9 from the rolling path.

In addition, in the connection portion, the load acting on the balls 9 is removed suddenly (when the balls 9 roll from the rolling path to the circulation path), or on the contrary the balls 9 are suddenly brought into a high load state from a load-free state (when the balls 9 roll from the circulation path to the rolling path).

On this occasion, the balls 9 collide with the corner portion of the connection portion so as to be prevented from circulating smoothly, while an intermittent high load acts on the corner portion so that the corner portion adapts itself gradually while repeating peeling and falling away.

When peeling and falling away occur thus, a peeling piece is bitten into the rolling path suffering a high load, so that the lubricating conditions are further degraded. It is an effective countermeasure to perform large R-processing on the corner portion of the connection portion so as to reduce the magnitude of the load. However, this countermeasure is difficult to be a perfect countermeasure because of its problem in increasing the processing cost and in management.

Carbonitriding treatment is applied to the surfaces of the balls 9 so as to adjust the residual austenite amount to 15-40% by volume in the surface layer, and further tumbling or ball-peening is performed on the surfaces so as to adjust the surface hardness to HRC 62-67 (Hv 746-900) . When the balls 9 produced thus are incorporated in the ball screw 1, damage can be reduced greatly.

That is, when the residual austenite amount is set to be 15-40% by volume, a softer structure than in the balls 9 having a martensitic structure in the related art is left so that the shock when the balls 9 collide with the corner portion of the connection portion can be relieved. Thus, the reduction of the life caused by biting of a large peeling piece can be prevented.

For the same reason, the shock load when the balls 9 are stopped and reversed after suffering a maximum load can be relieved so that the internal fatigue of the screw shaft 3 and the nut 7 can be reduced.

The reason why the residual austenite amount is set to be 15-40% by volume is that a sufficient buffer effect cannot be obtained if the residual austenite amount is lower than 15% by volume, and required surface hardness cannot be obtained if the residual austenite amount is higher than 40% by volume.

The reason why the surface hardness is set to be HRC 62-67 is that the life is shortened due to wearing of the balls 9 when the surface hardness is lower than HRC 62, and the residual austenite amount is inevitably reduced and hence the buffer effect is reduced when the surface hardness is higher than HRC 67. In order to obtain a desired result, it is preferable that the surface carbon concentration is set to be about 1.2-1.6% by weight, and the surface, nitrogen concentration is set to be about 0.1-0.6% by weight.

In addition, high-carbon chromium bearing steel such as SUJ2 having the Si content of 0.35% or lower and the total Cr+2.5Mo content of 2.0% or lower, preferable 1.8% or lower, is used as the material of the balls 9. When the Si content increases, carbonitriding is blocked so that the depth of penetration of carbon and nitrogen cannot be secured. Consequently, the heat treatment time is made longer than necessary, or a thickness of a treated layer required for abrasive finishing after the heat treatment cannot be secured.

In addition, when the si content increases, a conspicuous grain boundary oxidation layer is produced so that the cost of polishing is required to be higher than necessary, or there is a fear of short finishing.

The reason why the total Cr+2.5Mo content is set to be 2.0% or lower is that when the total Cr+2.5Mo content increases, coarse carbide may be produced in the carbonitriding treatment so that the lives of the balls 9 are reduced remarkably. It is preferable that the total Cr+2.5Mo content is set to be 1.8% or lower.

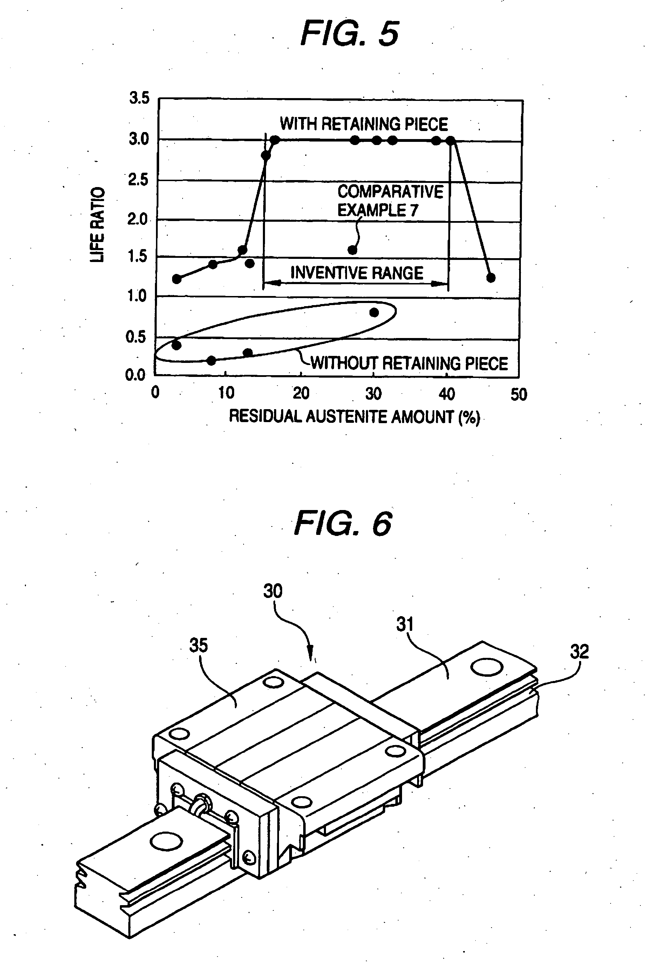

Incidentally, although the linear motion device according to the invention was described as a ball screw in the embodiment by way of example, the invention is not limited to the ball screw. As shown in Fig. 6, the invention is also applicable to a linear guide 30 having rolling element grooves 32 formedinboth side surfaces of a guide rail 31, and a plurality of balls (not shown) disposed so as to roll freely in rolling element grooves and ball circulation paths provided inside a slider 35.

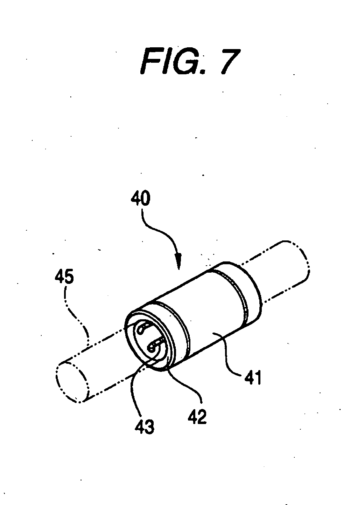

In addition, as shown in Fig. 7, the invention is also applicable to a device for allowing balls to roll to thereby move a linear motion body linearly, such as a linear ball bearing 40 including an outer pipe 41, a holder 42 received in the outer pipe 41 and having a substantially track-like guide groove formed to extend axially, and a plurality of balls 43 disposed to roll freely between the guide groove and a linear shaft 45 and to circulate through a circulation path.

### <Examples of the first embodiment>

Description will be made about examples of linear motion devices according to the invention and comparative examples for comparison with those examples. That is, description will be made about testing on Examples 1 to 7 carried out for confirming the effect of the linear motion device according to the invention and on Comparative Examples 1 to 11 carried out for making comparison with Examples 1 to 7.

A ball screw known by the bearing number "25 X 10 X 500-C5" according to JIS-1192 was used for testing. The ball screw was mounted in a ball screw durability life tester made by NSK Ltd. in the following testing conditions, and a test time taken for occurrence of damage such as wearing or peeling was recorded.

The time required for the expiration of the lives of 10% of shorter-life ball screws of 10 samples was obtained by Weibull distribution, and this was regarded as a test life.

The test result is expressed by a ratio of the test time to a theoretical life time calculated in the testing conditions. Incidentally, when the test time reached to a time three times as long as the theoretical life time, the durable life was regarded as sufficient, and the test was closed.

A screw shaft used was produced by induction-hardening SAE5140, and a nut used was produced by carburizing carburized bearing steel of SCM420.

In addition, balls were produced as follows. That is, steel materials shown in Table 1 were headed and rough-polished to produce crude balls. The crude balls were carbonitrided under the condition of RX gas, enriched gas and ammonia gas (1.5-5%) at 820-840°C for 1-3 hours, then oil-cooled and quench-hardened, tempered at 160-180°C for 1.5-2 hours, and rough-polished. After that, the balls were tumble-finished to G20 equivalent.

**Table 1**

| material | C | Si | Mn | Cr | Mo | Cr+2.5Mo |
|---|---|---|---|---|---|---|
| A-1 | 1.02 | 0.25 | 0.30 | 1.49 | - | 1.49 |
| A-2 | 0.98 | 0.35 | 0.28 | 1.45 | - | 1.45 |
| A-3 | 1.02 | 0.29 | 0.28 | 1.06 | - | 1.60 |
| A-4 | 1.03 | 0.57 | 1.04 | 1.08 | - | 1.08 |
| A-5 | 1.02 | 0.28 | 0.31 | 1.51 | 0.21 | 2.04 |

Each of retaining pieces was made of synthetic resin, had conical concave surfaces facing adjacent ones of balls, and had an outer diameter 0.8 times as large as the diameter of the ball. In addition, the total gap S1 was set to be larger than 0 (S1>0), and the gap S2 between the ball at the head and the ball at the tail on the assumption that the retaining piece at the tail was removed was set to be smaller than 0.8 times as large as the outer diameter ds of the retaining piece (S2<0.8×ds).

### <Testing Conditions>

| | | |
|---|---|---|
| | Bearing Number: | NSK ball screw 25×10×500-C5 |
| | | (ball diameter 3/16 inches) |
| | Testing Machine: | ball screw durability life tester made |
| | | by NSK Ltd. |
| | Test Load: | axial load 5800 N (P/C=0.5) |
| | | moment load 15 N·m |
| | Number of Revolutions: | 100-200 r.p.m. |
| | Stroke: | 60 mm |
| | Lubricant: | Albania No. 2 (Showa Shell Sekiyu K.K.) |

Table 2 shows the test results.

**Table 2**

| Example/ Comparative Example | No. | material | carbonitriding | tumbling | surface hardness (HRC) | residual austenite (%) | other | existence of retaining piece | life ratio |
|---|---|---|---|---|---|---|---|---|---|
| Examples | Example 1 | A-1 | Yes | yes | 62.0 | 40 | | Yes | 3.0 |
| | Example 2 | A-1 | yes | yes | 63.2 | 32 | | yes | 3.0 |
| | Example 3 | A-1 | yes | yes | 67.0 | 15 | | yes | 2.8 |
| | Example 4 | A-2 | yes | yes | 62.3 | 38 | | yes | 3.0 |
| | Example 5 | A-2 | yes | yes | 63.4 | 30 | | yes | 3.0 |
| | Example 6 | A-3 | yes | yes | 63.7 | 27 | | yes | 3.0 |
| | Example 7 | A-3 | yes | yes | 65.2 | 16 | | yes | 3.0 |
| Comparative Examples | Comp. Ex. 1 | A-1 | no | no | 62.2 | 8 | | yes | 1.4 |
| | Com. Ex. | A-1 | no | yes | 63.7 | 3 | | yes | 1.2 |
| | Comp Ex. | A-1 | yes | no | 59.2 | 46 | | yes | 1.2 |
| | Comp 4. Ex. | A-1 | yes | no | 61.8 | 13 | | yes | 1.4 |
| | Comp. Ex.5 | A-1 | yes | yes | 67.2 | 12 | | yes | 1.6 |
| | Comp.Ex. 6 | A-4 | yes | no | - | - | occurrence of short finishing | - | - |
| | Comp. Ex. | A-5 | yes | yes | 63.4 | 21 | | yes | 1.6 |
| | Comp. Ex. | A-1 | no | no | 62.2 | 8 | | no | 0.2 |
| | Comp.Ex. | A-1 | no | yes | 63.7 | 3 | | no | 0.4 |
| | Comp. Ex. 10 | A-1 | yes | no | 61.8 | 13 | | no | 0.3 |
| | Comp. Ex. | A-2 | yes | yes | 63.4 | 30 | | no | 0.8 |

In each of Examples 1 to 7, retaining pieces were interposed between balls, and a carbonitrided layer containing residual austenite of 15-40% by volume was provided in each surface layer of the balls. Accordingly, there is no damage caused by the competition of the balls, and the shock on the rolling path and the corner portion of the connection portion was relieved, while the shock on the balls when the balls were reversed was also relieved. As a result, except that the life ratio was 2.8 in Example 3, the life ratio was 3.0 in each of Examples 1 to 7, so that long life could be attained, and effectiveness of the invention was proved.

Incidentally, the reason why the life ratio was 3.0 in all the examples but Example 3 was that the test was closed at that time. When the ball screws were taken apart after the test and the degree of the internal damage was examined, the degree of the damage was so low that the ball screws were still in usable condition.

On the other hand, in Comparative Examples 1 and 2, balls produced by quench-hardening and tempering bearing steel of SUJ2 so as to adjust the surface hardness to about HRC 62-63 were used, and retaining pieces were interposed between the balls. In comparison with any one of Examples of the invention, each of the shafts, the nuts and the balls was damaged remarkably, and the lives of the ball screws were short.

In Comparative Example 3, balls produced by carbonitriding bearing steel of SUJ2 were used, and retaining pieces were interposed between the balls. The lives of the balls were short because the residual austenite amount in the ball surface was large to be 46% and hence the surface hardness was low to be about HRC 59.

In Comparative Examples 4 and 5, balls produced by carbonitriding bearing steel of SUJ2 were used, and retaining pieces were interposed between the balls. The surface hardness was comparatively high, but the residual austenite amount in the ball surface was small to be about 12%. Thus, since the residual austenite amount was not secured sufficiently, the surfaces of the balls were damaged more violently than those in Examples of the invention, so that the lives of the balls were shorter.

In Comparative Example 6, the thickness of a carbonitrided layer was not sufficient to secure the machining allowance. As a result, there occurred short finishing regarded as a grain boundary oxidation layer. Thus, the subsequent evaluation was canceled.

In Comparative Example 7, the Cr and Mo content in the material components was so high that the Cr+2. 5Mo content reached 2.04% (see Table 1). For this reason, somewhat coarse carbide was produced in carbonitriding treatment so that the lives of the balls were lowered.

Each of Comparative Examples 8 to 11 provided a related-art ball screw in which balls produced in various conditions shown in Table 2 were used and retaining pieces were not used. Since there was no function of the retaining pieces for preventing competition of the balls, the ball surface was damaged violently so that there occurred a failure in lubrication. As a result, peeling was confirmed in all the portions of the screw shaft, the nut and the balls. Thus, the life of the ball screw was extremely short.

The various test results of Examples and Comparative Examples are shown in Fig. 5 in the form of the relationship between the residual austenite amount and the life ratio. The retaining pieces and the residual austenite amount owing to the carbonitriding treatment had great influence on the life. Each ball screw having a residual austenite amount of 15-40% by volume and using retaining pieces had a very long life. The effectiveness of the invention was therefore proved.

As described above, in a linear motion device according to the first embodiment of the invention, retaining pieces each having two concave surfaces facing adjacent ones of rolling elements respectively are interposed between adjacent ones of the rolling elements respectively. Accordingly, the rolling elements roll and circulate in a rolling element groove while being in contact with, for example, the Gothic-arch-like concave surfaces of the retaining pieces with extremely low friction. Thus, the competition between the rolling elements is prevented so that operation failure and production of noise and abnormal sound, and the frictional damage of the rolling elements can be prevented from being caused by competition between the rolling elements.

In addition, a considerably large number of load rolling elements than in a linear motion device using spacer balls can be disposed so that the lives of the rolling elements can be elongated without reducing the allowable load capacity.

Furthers a carbonitrided layer containing residual austenite of 15-40% by volume is provided in the surface layer of each of the rolling elements. Accordingly, high surface hardness and moderate softness can be provided to the rolling elements. Thus, when the rolling elements roll in the rolling element groove and the circulation path, the shock when the rolling elements abut against the rolling element groove and the circulation path is relieved so that the rolling element groove and the circulation path, particularly the connection portion from the rolling element groove to the circulation path, or the corner portion formed in the connection portion from the circulation path to the rolling element groove can be prevented from falling away as a large peeling piece. Thus, good lubricating conditions can be kept for a long time.

In addition, a shock load acting on the rolling elements when the linear motion device is stopped and reversed after the linear motion device suffers a maximum load can be relieved. As a result, the internal fatigue of the shaft and the linear motion body is relieved so that the life of the linear motion device can be made long.

Next, a description will be given of a second embodiment of the invention.

In the second embodiment, at least one of constituent members of the ball screw 1, that is, the screw shaft 3, the nut 7 or each of the balls 9, is made of steel containing the following components. That is, at least one constituent member is made of a steel material containing 0.4 % by weight to 0.9 % by weight, both inclusively, of C, 2.5 % by weight to 8.5 % by weight, both inclusively, of Cr, 0.1 % by weight to 2.0 % by weight, both inclusively, of Si, 0.1 % by weight to 2.0 % by weight, both inclusively, of Mn, and the residual part of Fe or inevitable impurities while satisfying the relation: C content (% by weight) ≤ -0. 05 X Cr content (% by weight) + 1.41 (% by weight) . The steel material used is heated so that the surface hardness of the steel material is adjusted to an optimal hardness, e.g., to about HRC 56-63.

In addition to the components, the steel may further contains at least one component selected from 0.1 % by, weight to 1.5 % by weight, both inclusively, of Mo, and 0.1 % by weight to 1.5 % by weight, both inclusively, of V.

The remaining components and operations of the linear motion device of the second embodiment are identical to those of the first embodiment.

In the second embodiment, the inventors have made examination for many years about fatigue damage produced in the use condition of high rotational speed and high load in spite of interposition of the retaining pieces 21 between the rolling balls 9 to eliminate the competition between the balls 9. As a result, it has been found that inside start type peeling is a damage mode other than surface start type peeling heretofore regarded as being caused by lubricating failure.

That is, there has been obtained the knowledge that a large amount of shearing force acts on the inside of the material just under the contact ellipse so that an abnormal structure produced with the advance of rolling fatigue of the inside of the material becomes a factor of peeling.

This suggests that a problem having been not solved yet still remains even in the case where the retaining pieces 21 are interposed between the balls 9.

The abnormal structure is a structure called "white structure" in which dispersion of carbon contained in cementite in the metal structure is caused by rolling fatigue. Although the mechanism of generation of such an abnormal structure is not clear for the time being, it is conceivable that the abnormal structure will be caused by a mechanochemical reaction or hydrogen penetrating into steel because the abnormal structure is apt to be generated under the condition of large slip and high load.

According to further detailed examination about the abnormal structure, there has reached a conclusion that the generation of the abnormal structure can be suppressed to elongate the life of the ball screw when components of the metal, especially the content of the Cr component, are optimized.

The function of alloy components used in the second embodiment and the reason why ranges of the components are limited will be described below.

Carbon (C): 0.4 % by weight to 0.9% by weight

Carbon can be dissolved in the base while kept in a solid state, so that carbon has a function of improving hardness to increase strength after quench-hardening and tempering. Carbon can be combined with a carbide-forming element such as Cr to produce carbide, so that carbon also has a function of improving abrasion resistance.

If the C content is smaller than 0.4 % by weight, the amount of carbon dissolved in the base while kept in a solid state is so short that sufficient hardness cannot be ensured after quench-hardening and tempering.

If the C content is larger than 0.9 % by weight, coarse eutectic carbide is apt to be produced at the time of steel making so that the fatigue life and strength may be spoiled remarkably. In addition, cold processability and machinability may be lowered disadvantageously to the cost. Preferably, the C content may be selected to be in a range of from 0.5 % by weight to 0.8 % by weight.

### Chromium (Cr): 2.5 % by weight to 8.5 % by weight

Chromium is an element playing the most important role. Chromium stabilizes the metal structure to restrain greatly the abnormal structure from being produced from martens ite and cementite. Chromium also stabilizes an oxide film generated on a surface of steel to thereby suppress mechnochemical reaction and penetration of hydrogen.

Cr can be dissolved in the base while kept in a solid state, so that Cr has a function of improving softening resistance and corrosion resistance after quench-hardening and tempering. Cr can be used for forming fine carbide to prevent increase of the size of coarse crystal particles at the time of heat treatment, so that Cr also has a function of improving fatigue life characteristic and abrasion resistance.

If the Cr content is smaller than 2.5 % by weight, the effect of suppressing the generation of the abnormal structure is small. If the Cr content is larger than 8.,5 % by weight, cold processability and machinability may be lowered to bring increase in cost. In addition, coarse eutectic carbide may be produced so that the fatigue life and strength may be spoiled remarkably.

In consideration of the abnormal structure suppressing effect and the fatigue life, the Cr content may be preferably selected to be in a range of from 3. 0 % by weight to 7.5 % by weight.

### Manganese (Mg): 0.1 % by weight to 2.0 % by weight

Manganese is a necessary element as a deoxidation absorber at the time of steel making. 0.1% by weight or more of manganese can be added, so that manganese can be dissolved in the base while kept in a solid state, and manganese has a function of improving quench-hardenability.

If the Mg content is larger than 2.0 % by weight, the martensitic transformation initiating temperature may be reduced so that sufficient hardness cannot be obtained as well as cold processability and machinability may be lowered. Preferably, the Mg content may be selected to be in a range of from 0.2 % by weight to 1.5 % by weight.

### Silicon (Si): 0.1 % by weight to 2.0 % by weight

Like Mn, 0.1 % by weight or more of silicon can be added as a deoxidation absorber at the time of steel making. Like Cr and Mn, silicon is effective in improving quench-hardenability and in improving temper-softening resistance to strengthen the base martensite to elongate the bearing life.

If the Si content is larger than 2.0 % by weight, there is a possibility that machinability, forgeability and cold processability may be lowered. Preferably, the **Si** content may be selected to be in a range of from 0.5 % by weight to 1.5 % by weight.

### C content (% by weight) ≤ -0.05 X Cr content (% by weight) + 1.41 (% by weight)

If the C content and the Cr content cannot satisfy the relation though the amounts of the components contained are in the aforementioned ranges respectively, coarse eutectic carbide may be produced at the time of steel making so that the fatigue life and strength may be spoiled remarkably by stress concentration onto the eutectic carbide.

Preferably, the size of the eutectic carbide may be selected to be not larger than 20 µm.

### Molybdenum (Mo): 0.1 % by weight to 1.5 % by weight

Like Cr, molybdenum can be dissolved in the base while kept in a solid state, so that molybdenum has a function of improving quench-hardenability, temper-softening resistance and corrosion resistance. Molybdenum can be used for forming fine carbide to prevent increase of the size of coarse crystal particles at the time of heat treatment, so that molybdenum also has a function of improving fatigue life characteristic and abrasion resistance. In addition, molybdenum stabilizes the structure to restrain greatly the structure from changing to the abnormal structure.

For this reason, molybdenum can be selectively added by the amount acceptable in terms of cost. If an excessive amount of molybdenum is added, cold processability and machinability may be lowered to bring remarkable increase of the cost or coarse eutectic carbide may be produced to spoil the fatigue life and strength remarkably.

In consideration of abrasion resistance and cost, the Mo content may be preferably selected to be in a range of from 0.3% by weight to 1.0 % by weight.

### Vanadium (V): 0.1.% by weight to 1.5 % by weight

Vanadium is an element which is strongly effective in producing carbide and nitride. Vanadium has a function of improving strength and abrasion resistance remarkably. In addition, vanadium stabilizes the structure to restrain greatly the structure from changing to the abnormal structure.

For this reason, vanadium can be selectively added by the amount acceptable in terms of cost. If an excessive amount of vanadium is added, cold processability and machinability may be lowered to bring remarkable increase of the cost or coarse eutectic carbide may be produced to spoil the fatigue life and strength remarkably.

In consideration of abrasion resistance and cost, the V content may be preferably selected to be in a range of from 0.3 % by weight to 1.0 % by weight.

The linear motion device of the second embodiment is not also limited to the ball screw, but can be applied to a linear guide 30 as shown in Fig. 6 or a linear ball bearing 40 as shown in Fig. 7.

The material of each ball 9 is not limited to the alloy steel provided by the invention. For example, high-carbon chromium bearing steel such as SUJ2 or high-carbon chromium bearing steel subjected to a hardening process such as carbonitriding may be used as the material of each ball 9.

### <Examples of the second embodiment,>

Examples of the linear motion device according to the second embodiment of the invention and Comparative Examples for making comparison with the Examples will be described. That is, a test executed on Examples 8 to 16 for confirming the effect of the linear motion device according to the second embodiment and executed on Comparative Examples 12 to 17 for making comparison with the Examples 8 to 16 will be described.

A bail screw known by the bearing number "25 x 10 X 500-C5" according to JIS-1192 was used in the test. The ball screw was mounted in a ball screw durability life tester made by NSK Ltd. in the following test condition. Whenever a predetermined time passed, the test was interrupted to check whether the screw shaft was peeled or not. The test time until peeling occurs was regarded as the lifetime.

Each of the screw shaft and the nut was made of a steel material containing alloy components shown in Table 3. After annealed, the steel material was roughly cut by a turning process. After quench-hardened and tempered, the steel material was finished by a grinding process.

Quench-hardening of the screws shaft was made by induction hardening. A vacuum furnace was used for quench-hardening the nut so that utter quench-hardening of the nut was started at the temperature of 840°C to 1060°c. SCM420 used for comparison was carburized and quench-hardened. SAE4150 was processed by induction hardening. Each of the balls was produced out of high-carbon chromium bearing steel such as SUJ2.

Incidentally, each of materials A to G was a steel material containing alloy components provided by the invention.

**Table 3**

| | C % by weigh t | Cr % by weigh t | Si % by weigh t | Mn % by weigh t | Mo % by weigh t | V % by weigh t | c ≤ -0.05 x Cr + 1.41 |
|---|---|---|---|---|---|---|---|
| Material A | 0.9 | 2.5 | 1.4 | 1.1 | | | Yes |
| Material B | 0.7 | 3.0 | 0.9 | 0.3 | | | Yes |
| Material C | 0.9 | 5.1 | 0.5 | 1.0 | | | Yes |
| Material D | 0.5 | 7.5 | 1.0 | 0.4 | | | Yes |
| Material E | 0.7 | 8.5 | 0.4 | 0.3 | | | Yes |
| Material F | 0.7 | 3.1 | 1.1 | 0.3 | 1.1 | | Yes |
| Material G | 0.4 | 6.9 | 0.5 | 0.4 | | 0.6 | Yes |
| Material H | 0.7 | 2.1 | 1.1 | 0.4 | | | Yes |
| Material I | 1.1 | 7.1 | -0.4 | 0.3 | | | No |
| Maternal 1 | 1.0 | 8.9 | 0.4 | 0.3 | | | No |
| SCM420 | 0.2 | 0.2 | 0.3 | 1.4 | | | - |
| SAE4150 | 0.5 | 1.0 | 0.3 | 0.8 | 0.2 | | - |

Each of the retaining pieces was made of Nylon. Each of the retaining pieces had a pair of concave surfaces facing adjacent ones of the balls. Each of the concave surfaces was shaped like a cone. The outer diameter of each of the retaining pieces was set to be 0.8 times as large as the diameter of each ball. Setting was made so that the total gap S1 was larger than zero (S1 > 0) whereas the gap S2 between the ball at the head and the ball at the tail on the assumption that one retaining piece at the tail was removed was smaller than 0.8 times as large as the outer diameter ds of each retaining piece (S2 < 0.8 X ds).

The screw shaft, the nut, the balls and the retaining pieces produced in the aforementioned manner were assembled into a ball screw according to each of combinations shown in Table 2. The ball screw thus produced was used as a sample to be subjected to the test.

### <Test Condition>

| | | |
|---|---|---|
| | Bearing Number: | NSK ball screw 25 X 10 X 500-C5 |
| | | (ball diameter: 3/16 inch) |
| | Testing Machine: | ball screw durability life tester |
| | | made by NSK Ltd: |
| | Test Load: | axial load 5800 N (P/C - 0.5) |
| | Number of Revolutions: | 200 r.p.m. |
| | Stroke: | 60 mm |
| | Lubricant: | mineral oil grease |

Results of the test are shown in Table 4.

The life ratio shown in Table 4 is expressed as a ratio in the case where the lifetime obtained in Comparative Example 12 is regarded as a standard (1.0). Incidentally, the reason why Comparative Example 12 is used as a standard is based on the fact that each of the screw shaft and the nut is made of SCM420 which is a steel material heretofore generally used.

**Table 4**

| | Screw shaft | Nut | Life ratio | Retaining Pieces |
|---|---|---|---|---|
| Example 8 | Material A | Material A | 3.9 | present |
| Example 9 | Material B | Material B | 5.1 | |
| Example 10 | Material C | Material C | 6.2 | |
| Example 11 | Material D | Material D | 7.0 | |
| Example 12 | Material E | Material E | 6.8 | |
| Example 13 | Material F | Material F | 6.4 | |
| Example 14 | Material G | Material G | 7.8 | |
| Example 15 | Material B | SCM420 | 4.3 | |
| Example 16 | Material D | SCM420 | 6.0 | |
| Comparative Example 12 | SCM420 | SCM420 | 1.0 | |
| Comparative Example 13 | SAE4150 | SAE4150 | 0.8 | |
| Comparative Example 14 | Material H | Material H | 1.3 | |
| Comparative Example 15 | Material I | Material I | 2.9 | |
| Comparative Example 16 | Material J | Material J | 2.5 | |
| Comparative Example 17 | Material C | Material C | 0.6 | Absent |

In each of the ball screw samples of Examples 8 to 16 in which a steel material containing alloy components provided by the second embodiment of the invention is used as any one of the screw shaft and the nut, it is obvious that the life of the ball screw is improved greatly.

Particularly in each of Examples 13 and 14, this effect is remarkable because the steel material contains Mo or V.

In each of the ball screw samples of Examples 15 and 16, a steel material containing alloy components provided by the invention is used only as the screw shaft. Because the test condition that rolling fatigue occurs easily particularly in the screw shaft is used in the life test, the life improving effect is obtained in each of Examples 15 and 16.

This result means that the life improving effect is obtained when a steel material containing alloy components provided by the second embodiment of the invention is used as the material of at least one member in which rolling fatigue occurs most easily and which is selected from the screw shaft, the nut and the balls in accordance with the condition of use of the ball screw.

On the other hand, in each of Comparative Examples 12, 13. and 14 using steel heretofore generally used, the effect of suppressing the abnormal structure is small because the Cr content is small. As a result, the life is shortened.

In each of Comparative Examples 15 and 16, the Cr content is the range provided by the invention but the Cr content and the C content do not satisfy the relation: C content (% by weight) ≤ -0.05 X Cr content (% by weight) + 1.41 (% by weight). For this reason, large-size eutectic carbide is produced in the steel, so that local stress concentration occurs to promote rolling fatigue. As a result, the life is shortened.

In Comparative Example 17, the screw shaft and the nut each using a steel material containing alloy components provided by the second embodiment of the invention are used in combination but there is no retaining piece. For this reason, the competition between adjacent ones of the balls occurs so that frictional damage of ball surfaces is severe. The lubricating state is worsened remarkably due to reduction in surface roughness of each ball and penetration of abraded steel powder into grease, so that surface fatigue occurs early. As a result, the life is shortest.

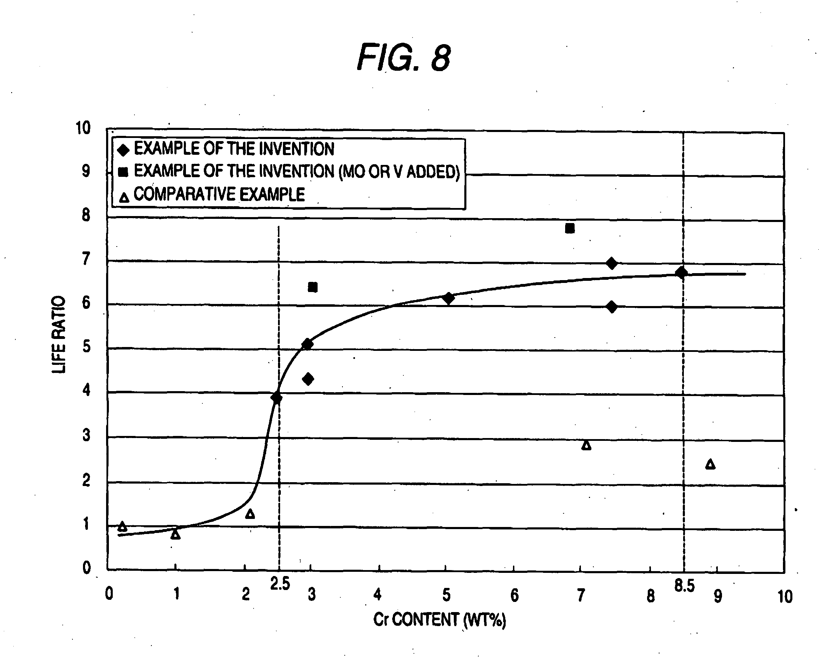

As shown in Fig. 8, the test results are expressed in the relation between the Cr content and the lifetime. It is obvious that the life of the ball screw is improved remarkably when a steel material containing 2.5 % by weight to 8.5 % by weight, both inclusively, of Cr is used in the ball screw. Particularly when the steel material contains Mo or V, the life of the ball screw is improved remarkably. Accordingly, the validity of the invention is proved.

As described above, according to the second embodiment of the invention, because the retaining pieces each having a pair of concave surfaces facing adjacent ones of the rolling elements respectively are disposed between adjacent ones of the rolling elements, the rolling elements roll and circulate together with the retaining pieces in the rolling element groove, for example, while being in very-low frictional contact with the concave surfaces of the retaining pieces. As a result, the competition between the rolling elements can be prevented, so that operation failure, production of noise or abnormal sound and frictional damage of the rolling elements can be prevented from being caused by the competition between the rolling elements.

Furthermore, a considerably large number of load rolling elements can be disposed compared with the linear motion device using spacer balls, so that elongation in life can be attained without reduction in allowable load capacity.

Furthermore, because at least one kind of the shaft, the linear motion body and the rolling elements is made of steel containing 0.4 % by weight to 0. 9 % by weight, both inclusively, of C, 2.5 % by weight to 8.5 % by weight, both inclusively, of Cr, 0.1 % by weight to 2.0 % by weight, both inclusively, of Si, 0,1-% by weight to 2.0 % by weight, both inclusively, of Mn, and the residual part of Fe or inevitable impurities while satisfying the relation: C content (% by weight) ≤ -0.05 X Crcontent (% by weight) +1.41 (% by weight), the metal structure can be stabilized so that the generation of an abnormal structure can be restrained from being caused by rolling fatigue of the inside of the material just under the contact ellipse on which a large amount of shearing force acts. Accordingly, inside, start type peeling can be prevented.

Preferably, in the above linear motion device, because the steel having the components as described above further contains at least one component selected from the group consistingof 0.1 %byweight to 1.5 %byweight, both inclusively, of Mo, and 0.1 % by weight to 1.5 % by weight, both inclusively, of V, increase of the size of coarse crystal particles at the time of heat treatment is prevented as well as fine carbide is formed. As result, the metal structure can be stabilized so that the generation of the abnormal structure can be suppressed greatly. Accordingly, inside start type peeling can be prevented from being caused by rolling fatigue of the portion on which a high load acts, so that the life of the ball screw can be elongated.

As described above, the ball screw according to the invention can be kept long-lived even in the case where the ball screw is used in an environment that a high load is imposed on the ball screw.

While only certain embodiments of the invention have been specifically described herein, it will apparent that numerous modifications may be made thereto,

## Claims

1. A linear motion device (1,30,40) for use in an electrically operated injection molding machine or an electrically operated pressing machine, the linear motion device (1,30,40) comprising:
a shaft (3,31,45);
a linear motion body (7,35,41) fitted to said shaft (3,31,45) and guided by said shaft so as to be linearly movable in an axial direction of said shaft;
a plurality of rolling elements (9,43) disposed between said shaft (3,31,45) and a rolling element groove (5) formed in an inner circumferential surface of said linear motion body (7,35,41) so as to roll freely;
a circulation path (15) formed in said linear motion body (7,35,41), for circulating said rolling elements (9,43) from one end side of said rolling element groove to the other end side thereof; and
retaining pieces (21) each disposed between adjacent ones of said rolling elements (9,43) and having two concave surfaces (23) facing said adjacent ones of said rolling elements (9,43) respectively,
**characterized**
**in that** a carbonitrided layer containing residual austenite of 15-40% by volume is provided in a surface layer of each of said rolling elements (9,43),
**in that** the surface carbon concentration on the rolling elements (9,43) is set to be 1.2 to 1.6% by weight,
and **in that** the surface nitrogen concentration is set to be 0.1 to 0.6% by weight.

2. The linear motion device according to claim 1, wherein each of said rolling elements (9,43) is made of a bearing steel having Si content of 0.35% or lower and a total Cr+₂.5Mo content of 2.0% or lower.

## Patentansprüche

1. Linearführungsvorrichtung (1, 30, 40) zur Verwendung in einer elektrisch betriebenen Spritzgussmaschine oder in einer elektrisch betriebenen Druckmaschine, wobei die Linearführungsvorrichtung (1, 30, 40) umfasst:
eine Welle (3, 31, 45);
einen Linearführungskörper (7, 35, 41), der an der Welle (3, 31, 45) angeordnet und so mittels der Welle geführt ist, dass er in einer axialen Richtung der Welle linear bewegbar ist;
eine Vielzahl von Wälzelementen (9, 43), die frei wälzbar angeordnet sind zwischen der Welle (3, 31, 45) und einer Wälzelement-Nut (5), die in einer inneren Umfangsoberfläche des Linearführungskörpers (7, 35, 41) geformt ist;
einen in dem Linearführungskörper (7, 35, 41) gebildeten Zirkulationspfad (15) zum Zirkulieren der Wälzelemente (9, 43) von der einen Endseite der Wälzelement-Nut zu deren anderer Endseite; und
Abstandsstücke (21), die jeweils zwischen benachbarten Wälzelementen (9, 43) angeordnet sind und jeweils zwei konkave Oberflächen (23) haben, die jeweils benachbarten Wälzelementen (9, 43) zugewandt sind,
**dadurch gekennzeichnet,**
**dass** eine karbonitrierte Schicht in einer Oberflächenschicht jedes der Wälzelemente (9, 43) vorgesehen ist, wobei die karbonitrierte Schicht einen remanenten Austenit-Gehalt von 15 bis 40 Vol% enthält,
**dass** die Kohlenstoff-Konzentration in der Oberfläche der Wälzelemente (9, 43) auf 1,2 bis 1,6 Gew.-% gesetzt wurde,
und **dass** die Stickstoffkonzentration der Oberfläche auf 0,1 bis 0,6 Gew.-% gesetzt wurde.

2. Linearführungsvorrichtung nach Anspruch 1, wobei jedes Wälzelement (9, 43) hergestellt ist aus einem Lagerstahl mit einem Si-Gehalt von 0,35 % oder weniger, und mit einem Gesamtgehalt an Cr+2,5Mo von 2,0 % oder weniger.

## Revendications

1. Dispositif à mouvement linéaire (1, 30, 40) pour utilisation dans une machine de moulage par injection actionnée électriquement ou une presse actionnée électriquement, le dispositif à mouvement linéaire (1, 30, 40) comportant :
un arbre (3, 31, 45) ;
un corps à mouvement linéaire (7, 35, 41) monté sur ledit arbre (3, 31, 45) et guidé par ledit arbre afin d'être linéairement mobile dans une direction axiale dudit arbre ;
une multiplicité d'éléments de roulement (9, 43) disposés entre ledit arbre (3, 31, 45) et une rainure d'élément de roulement (5) formée dans une surface circonférentielle intérieure dudit corps à mouvement linéaire (7, 35, 41) de façon à rouler librement ;
un chemin de circulation (15) formé dans ledit corps à mouvement linéaire (7, 35, 41), pour une circulation desdits éléments de roulement (9, 43) depuis un côté d'extrémité de ladite rainure d'élément de roulement jusqu'à l'autre côté d'extrémité de celle-ci ; et
des pièces de retenue (21) disposées chacune entre des éléments adjacents desdits éléments de roulement (9, 43) et ayant deux surfaces concaves (23) faisant face aux dits éléments adjacents desdits éléments de roulement (9, 43) respectivement,
**caractérisé**
**en ce qu'**une couche carbonitrurée contenant de l'austénite résiduelle à 15 à 40% en volume est prévue dans une couche de surface de chacun desdits éléments de roulement (9, 43),
**en ce que** la concentration en carbone en surface sur les éléments de roulement (9, 43) est prévue pour être de 1,2 à 1,6% en poids,
et **en ce que** la concentration en azote en surface est prévue pour être de 0,1 à 0,6% en poids.

2. Dispositif à mouvement linéaire selon la revendication 1, dans lequel chacun desdits éléments de roulement (9, 43) est fabriqué en acier à roulement ayant une teneur en Si de 0,35% ou moins et une teneur totale en Cr+2,5Mo de 2,0% ou moins.
